# EUROPÄISCHE PATENTANMELDUNG

(11) **EP 0 919 765 A2**
(43) Veröffentlichungstag der Anmeldung: **02.06.1999**
(21) Anmeldenummer: 98121446.3
(22) Anmeldetag: 11.11.1998
(51) Int. Cl.: F17C 5/06

(54) **Vorrichtung zum dichten Verschweissen eines Hochdruckbehälters**

(30) Priorität: 26.11.1997 DE 19752326
(71) Anmelder: MBB Airbag Systems GmbH, 73230 Kirchheim u. Teck (DE)
(72) Erfinder: Bauer, Harald, 73230 Kirchheim (DE); Gebers, Manfred, 73230 Kirchheim-Nabern (DE); Siebenrock, Peter, 88515 Ingenenslingen (DE)
(74) Vertreter: Nockher, Gerhard, Dipl.-Ing.

(57) **Zusammenfassung**

Eine Vorrichtung zur Aufnahme, zum Befüllen und zum dichten Verschweißen eines Hochdruckbehälters, der zwischen einem oberen Deckel und einem unteren Deckel aufnehm- und verspannbar ist, wobei in dem oberen Deckel eine Befüllkammer vorgesehen ist, die einerseits zu einer Befüllbohrung in der zugewandten Wand des Hochdruckbehälters offen und andererseits durch eine Scheibe aus durchsichtigem, kristallinem Werkstoff dicht abgeschlossen ist, und in die eine unterbrechbare Befülleitung ausmündet, und wobei oberhalb der Scheibe eine Schweißenergie-Strahlungsquelle angeordnet ist, deren Strahlung den kristallinen Werkstoff durchdringt, soll einfacher aufgebaut und universeller verwendbar werden sowie kostengünstiger arbeiten.

Dies wird dadurch erreicht, daß der obere Deckel auf dessen dem Hochdruckbehälter zugewandter Seite eine an der zugewandten Wand des Hochdruckbehälters zur dichten Anlage bringbare Ringdichtung enthält.

## Beschreibung

Die Erfindung bezieht sich auf eine Vorrichtung zur Aufnahme, zum Befüllen und zum dichten Verschweißen eines Hochdruckbehälters, der zwischen einem oberen Deckel und einem unteren Deckel aufnehm- und verspannbar ist, wobei in dem oberen Deckel eine Befüllkammer vorgesehen ist, die einerseits zu einer Befüllbohrung in der zugewandten Wand des Hochdruckbehälters offen und andererseits durch eine Scheibe aus durchsichtigem, kristallinem Werkstoff dicht abgeschlossen ist, und in die eine unterbrechbare Befülleitung ausmündet, und wobei oberhalb der Scheibe eine Schweißenergie-Strahlungsquelle angeordnet ist, deren Strahlung den kristallinen Werkstoff durchdringt.

Bei einer bekannten Vorrichtung dieser Art (DE 42 08 841 C1) ist in einem einen Teil einer Kammer bildenden oberen Deckel, auf dem oben zusätzlich eine obere Abdeckung angeordnet ist, eine nach oben weisende, zentrale Sackbohrung vorgesehen, in deren Umfangsfläche eine Ringdichtung liegt. In diese Sackbohrung mit Ringdichtung ist ein Hochdruckbehälter mit seinem oberen, zylindrischen Halsstück einführbar, um den Hochdruckbehälter befüllen und dicht verschweißen zu können, der dabei mittels des unteren Deckels verspannt ist.

Nachteilig an dieser bekannten Vorrichtung ist insbesondere, daß darin nur Hochdruckbehälter mit einem oberen, zylindrischen, eng tolerierten Halsstück aufgenommen und behandelt werden können. Außerdem können in diese bekannte Vorrichtung Hochdruckbehälter nur von unten eingeführt werden, da die Kammer eine geschlossene Umfangswand aufweist.

Es ist Aufgabe der Erfindung, eine einfacher aufgebaute, universeller verwendbare und kostengünstiger arbeitende Vorrichtung anzugeben.

Diese Aufgabe ist bei einer Vorrichtung der eingangs genannten Art dadurch gelöst, daß der obere Deckel auf dessen dem Hochdruckbehälter zugewandter Seite eine an der zugewandten Wand des Hochdruckbehälters zur dichten Anlage bringbare Ringdichtung enthält.

Mit dieser Vorrichtung können Hochdruckbehälter mit flacher oder gewölbter, dem oberen Deckel zugewandter Wand aufgenommen und behandelt werden, und zwar auch wenn diese vor dem Aufbringen der Verspannung des oberen Deckels gegenüber dem unteren Deckel von seitswärts eingebracht werden sollen.

Als Strahlungsquelle kann ein Laser, beispielsweise ein handelsüblicher ND-YAG-Laser verwendet werden.

Ein besonders einfacher Aufbau der Vorrichtung kann dadurch erreicht werden, daß der obere und der untere Deckel durch mindestens zwei Säulen gegeneinander verspannbar sind. Um im Falle eines Berstens des Hochdruckbehälters beim Befüllen die Umgebung vor Splittern zu schützen, können innerhalb der Säulen Splitterabschirmungen vorgesehen sein.

Zweckmäßigerweise kann die Befüllbohrung in dem Hochdruckbehälter in der Verlängerung nach unten der Mittelachse der Befüllkammer angeordnet sein, wodurch sich ein achsensymmetrischer Aufbau der Vorrichtung ergibt.

Einerseits kann die Strahlungsquelle in der Verlängerung nach oben der Mittelachse der Befüllkammer statt angeordnet sein. Damit wird die Schweißenergie zentral in der Befüllbohrung zur Wirkung gebracht.

Andererseits kann Strahlungsquelle in der Verlängerung nach oben der Mittelachse der Befüllkammer um einen kleinen Winkel schwenkbar und um die Mittelachse drehbar angeordnet sein. Damit kann mittels eines ein- oder mehrmaligen Umlaufs der Strahlung über den Rand der Befüllbohrung das Verschweißen der Befüllbohrung durchgeführt werden.

Um ein Absaugen ursprünglich in dem Hochdruckbehälter befindlicher Luft durch die Befüllkammer zu ermöglichen, kann die Befüllkammer an ein Evakuiergerät anschließbar sein.

Falls der Hochdruckbehälter mit einem reaktionsfähigen Gas befüllt werden soll, muß während des Verschweißens das reaktionsfähige Gas von dem Bereich des Verschweißens weggedrängt werden. Dazu dient die Maßnahme, daß in die Befüllkammer zusätzlich eine unterbrechbare Zuleitung für Schweißschutzgas ausmündet.

Das Verschweißen kann unter Umständen dadurch verbessert und erleichtert werden, daß die der Befüllkammer zugewandte Wand des Hochdruckbehälters eine die Befüllbohrung umschließende Kerbe aufweist.

Die vorstehend benutzten Begriffe "oben" und "unten" sind nur zur Vereinfachung der Darstellung verwendet und bezeichnen nicht notwendigerweise eine bestimmte Lage der Teile im Raum. Da der Betrieb der Vorrichtung nicht durch Wirkungen der Schwerkraft beeinflußt ist, kann die Orientierung der Vorrichtung und damit die Lage der Teile derselben im Raum beliebig gewählt werden. Vorstehende Einschränkung der Bedeutung der Begriffe "oben" und "unten" gilt auch für die folgende Beschreibung des Ausführungsbeispiels und dessen zeichnerische Darstellung.

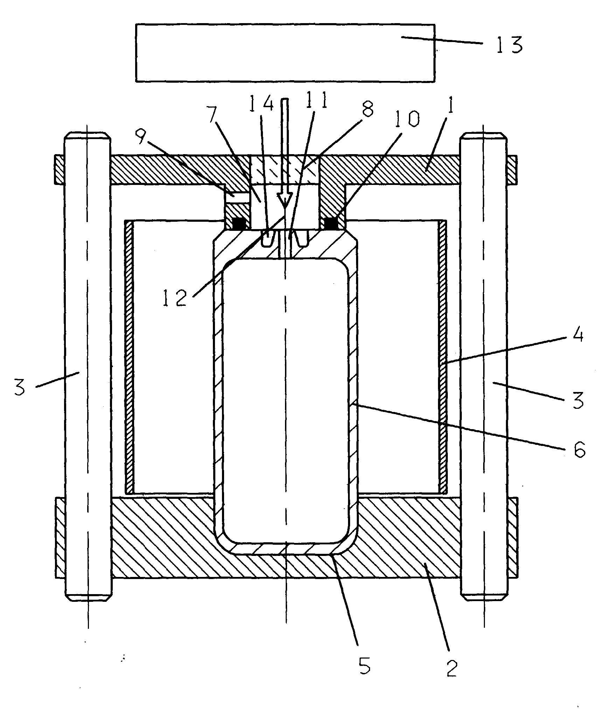

In der Zeichnung ist ein lotrechter Mittelschnitt eines Ausführungsbeispiels einer Vorrichtung nach der Erfindung dargestellt.

Ein oberer Deckel 1 und ein unterer Deckel 2 sind durch zwei Säulen 3 verbunden und durch - in der Zeichnung nicht dargestellte - Mittel gegeneinander verspannbar. Innerhalb der Säulen 3 ist zwischen den beiden Deckeln 1,2 eine Splitterabschirmung 4 in der Form eines zylindrischen Mantels angeordnet. Der untere Deckel 2 weist auf seiner Oberseite eine zylindrische Ausnehmung 5 auf, in die ein zu befüllender Hochdruckbehälter 6 eingeführt ist. Der obere Deckel 1 weist mittig eine Befüllkammer 7 auf, die oben durch eine Scheibe 8 aus durchsichtigem, kristallinem Werkstoff dicht abgeschlossen ist. Die Befüllkammer 7 weist seitlich eine Befüllöffnung 9 auf, in die eine - in der Zeichnung nicht dargestellte - Befülleitung ausmündet. Die Befüllkammer 7 ist nach unten offen. Auf der Unterseite des oberen Deckels 1 ist die Öffnung der Befüllkammer 7 umschließend eine Ringdichtung 10 angeordnet.

Bei eingesetztem Hochdruckbehälter 6 mit in dessen oberer Wand vorgesehener, mittiger Befüllbohrung 11 liegt die Ringdichtung 10 unter der Wirkung der Verspannung der beiden Deckel 1,2 gegeneinander dichtend an der oberen Wand des Hochdruckbehälters 6 an. Die Befüllbohrung 11 des Hochdruckbehälters 6 liegt in der Verlängerung nach unten der Mittelachse 12 der Befüllkammer 7. In der Verlängerung nach oben der Mittelachse 12 der Befüllkammer 7 ist eine Strahlungsquelle 13 angeordnet, und zwar entweder starr oder um einen kleinen Winkel schwenkbar und um die Mittelachse 12 drehbar.

An die Befüllkammer 7 kann ein - in der Zeichnung nicht dargestelltes - Evakuiergerät anschließbar sein. Außerdem kann in die Befüllkammer 7 eine - in der Zeichnung nicht dargestellte - Zuleitung für Schweißschutzgas ausmünden, und zwar entweder über die Befüllöffnung 9 oder eine zusätzliche Öffnung.

Die obere Wand des Hochdruckbehälters 6 weist eine die Befüllbohrung 11 umschließende, ringförmige Kerbe 14 auf. Der zwischen Befüllbohrung 11 und Kerbe 14 liegende Werkstoff wird beim dichten Verschweißen der Befüllbohrung 11 verarbeitet.

Die Vorrichtung nach der Erfindung ist folgendermaßen zu betreiben.
a. Einsetzen und Verspannen eines Hochdruckbehälters 6 zwischen den Deckeln 1,2.
b. Absaugen in dem Hochdruckbehälter 6 enthaltener Luft mittels des Evakuiergerätes, falls erforderlich.
c. Befüllen des Hochdruckbehälters 6 mit einem Füllgas.
d. Steigern des Druckes des Füllgases in dem Hochdruckbehälter 6 auf den Prüfdruck.
e. Absenken des Druckes des Füllgases in dem Hochdruckbehälter 6 auf den Befülldruck.
f. Einführen von Schweißschutzgas in den Hochdruckbehälter 6 mit einem Druck wenig über dem Befülldruck, wodurch das Füllgas aus dem Bereich des Verschweißens verdrängt wird, falls erforderlich.
g. Gasdichtes Verschweißen der Befüllbohrung 11 mittels der Strahlungsquelle 13.
h. Absenken des Druckes in der Befüllkammer 7 auf Umgebungsdruck.
i. Aufheben der Verspannung zwischen den Deckeln 1,2 und Entnehmen des fertigen Hochdruckbehälters 6.

Das Einführen von Schweißschutzgas (Schritt f.) ist insbesondere erforderlich, wenn das Befüllgas ein reaktionsfähiges Gas ist.

Bei der Vorrichtung nach der Erfindung wird ohne Zusatz von Schweißwerkstoff gearbeitet. Dies hat den Vorteil, daß sich die Masse des Hochdruckbehälters nicht ändert und folglich die Masse des eingebrachten Füllgases genau ermittelt werden kann.

Die Strahlungsquelle 13 kann eine gepulste oder konstante Strahlung erzeugen und mit unbeweglicher oder beweglicher Führung der Strahlung arbeiten. Eine Strahlungsquelle 13 kann alternierend in mehreren Vorrichtungen nach der Erfindung eingesetzt werden.

### Bezugszeichenliste

- 1: oberer Deckel
- 2: unterer Deckel
- 3: Säule
- 4: Splitterabschirmung
- 5: Ausnehmung (in 2)
- 6: Hochdruckbehälter
- 7: Befüllkammer
- 8: Scheibe
- 9: Befüllöffnung
- 10: Ringdichtung
- 11: Befüllbohrung (in 6)
- 12: Mittelachse (von 7)
- 13: Strahlungsquelle
- 14: Kerbe (in 6)

## Patentansprüche

1. Vorrichtung zur Aufnahme, zum Befüllen und zum dichten Verschweißen eines Hochdruckbehälters, der zwischen einem oberen Deckel und einem unteren Deckel aufnehm- und verspannbar ist, wobei in dem oberen Deckel eine Befüllkammer vorgesehen ist, die einerseits zu einer Befüllbohrung in der zugewandten Wand des Hochdruckbehälters offen und andererseits durch eine Scheibe aus durchsichtigem, kristallinem Werkstoff dicht abgeschlossen ist, und in die eine unterbrechbare Befülleitung ausmündet, und wobei oberhalb der Scheibe eine Schweißenergie-Strahlungsquelle angeordnet ist, deren Strahlung den kristallinen Werkstoff durchdringt, dadurch gekennzeichnet, daß der obere Deckel (1) auf dessen dem Hochdruckbehälter (6) zugewandter Seite eine an der zugewandten Wand des Hochdruckbehälters (6) zur dichten Anlage bringbare Ringdichtung (10) enthält.

2. Vorrichtung nach Anspruch 1, dadurch gekennzeichnet, daß die Strahlungsquelle (13) ein Laser ist.

3. Vorrichtung nach Anspruch 1 oder 2, dadurch gekennzeichnet, daß der obere und der untere Deckel (1,2) durch mindestens zwei Säulen (3) gegeneinander verspannbar sind.

4. Vorrichtung nach Anspruch 3, dadurch gekennzeichnet, daß innerhalb der Säulen (3 ) Splitterabschirmungen (4) vorgesehen sind.

5. Vorrichtung nach einem der Ansprüche 1 bis 4, dadurch gekennzeichnet, daß die Befüllbohrung (11) in dem Hochdruckbehälter (6) in der Verlängerung nach unten der Mittelachse (12) der Befüllkammer (7) angeordnet ist.

6. Vorrichtung nach Anspruch 5, dadurch gekennzeichnet, daß die Strahlungsquelle (13) in der Verlängerung nach oben der Mittelachse (12) der Befüllkammer (7) starr angeordnet ist.

7. Vorrichtung nach Anspruch 5, dadurch gekennzeichnet, daß die Strahlungsquelle (13) in der Verlängerung nach oben der Mittelachse (12) der Befüllkammer (7) um einen kleinen Winkel schwenkbar und um die Mittelachse (12) drehbar angeordnet ist.

8. Vorrichtung nach einem der vorhergehenden Ansprüche, dadurch gekennzeichnet, daß die Befüllkammer (7) an ein Evakuiergerät anschließbar ist.

9. Vorrichtung nach einem der vorhergehenden Ansprüche, dadurch gekennzeichnet, daß in die Befüllkammer (7) zusätzlich eine unterbrechbare Zuleitung für Schweißschutzgas ausmündet.

10. Vorrichtung nach einem der vorhergehenden Ansprüche, dadurch gekennzeichnet, daß die der Befüllkammer (7) zugewandte Wand des Hochdruckbehälters (6) eine die Befüllbohrung (11) umschließende Kerbe (14) aufweist.
